# EUROPEAN PATENT APPLICATION

(11) **EP 4 368 915 A1**
(43) Date of publication of application: **15.05.2024**
(21) Application number: 21949334.3
(22) Date of filing: 08.07.2021
(51) Int. Cl.: F25B 1/00

(54) **HEAT PUMP SYSTEM**

(71) Applicant: MITSUBISHI ELECTRIC CORPORATION, Chiyoda-ku Tokyo 100-8310 (JP)
(72) Inventor: KADOWAKI, Kimitaka, Tokyo 100-8310 (JP); ITO, Masahiro, Tokyo 100-8310 (JP); GYOTOKU, Shunya, Tokyo 100-8310 (JP); ITO, Takuya, Tokyo 100-8310 (JP)
(74) Representative: Witte, Weller & Partner Patentanwälte mbB
(86) International application number: PCT/JP2021/025796
(87) International publication number: WO 2023/281701

(57) **Abstract**

A heat pump system is configured to, by use of a heat medium flowing in a heat medium circuit, regulate a temperature of an object to be temperature-regulated. A heat source apparatus is configured to regulate a temperature of the heat medium through heat exchange with refrigerant. The heat pump system includes a flow-rate acquisition device configured to acquire a flow rate of the heat medium. The heat source apparatus includes a compressor, a heat medium heat exchanger, and a controller. The heat medium heat exchanger is configured to exchange heat between the heat medium and the refrigerant. The controller includes adjustment calculation circuitry, and control calculation circuitry. The adjustment calculation circuitry is configured to, when a first condition is met, calculate an amount of adjustment by use of an operating frequency of the compressor. The amount of adjustment is used to adjust a first flow rate. The first flow rate is a flow rate of the heat medium based on a measurement result acquired from the flow-rate acquisition device. The control calculation circuitry is configured to, by use of the amount of adjustment, adjust the first flow rate of the heat medium that is based on the measurement result acquired from the flow-rate acquisition device.

## Description

### Technical Field

The present disclosure relates to a heat pump system configured to circulate a heat medium to regulate the temperature of an object to be temperature-regulated.

### Background Art

A heat pump system in the related art has been known that executes air conditioning or other operations by use of a heat medium that exchanges heat with refrigerant (see, for example, Patent Literature 1). In such a heat pump system, a pump is driven to circulate the heat medium in a heat medium circuit. The heat pump system includes a heat exchanger configured to exchange heat between the refrigerant and the heat medium.

To prevent freezing of the heat medium in the heat exchanger, the pump of the heat pump system needs to be controlled such that the heat medium flows into the heat exchanger at a flow rate greater than or equal to a predetermined threshold flow rate. To keep the flow rate of the heat medium greater than or equal to the threshold flow rate, it is desired for the heat pump system to be able to acquire the flow rate of the heat medium. In some cases, the heat pump system is thus provided with, for example, a flow-rate acquisition device such as a flow rate sensor to acquire information representative of the flow rate of the heat medium. This makes it possible for the heat pump system to control the pump based on the flow rate acquired by the flow-rate acquisition device, and to consequently reduce potential freezing of the heat exchanger.

### Citation List

### Patent Literature

Patent Literature 1: Japanese Unexamined Patent Application Publication No. 2014-35092

### Summary of Invention

### Technical Problem

Aging of the flow-rate acquisition device, formation of scales in the heat medium circuit, or other factors, however, may cause the accuracy of the flow-rate acquisition device to decrease. A situation may thus occur in which the heat medium flows in the heat medium circuit at a flow rate below a threshold flow rate, leading to freezing of the heat exchanger.

The present disclosure is directed to addressing the above-mentioned problem. Accordingly, it is an object of the present disclosure to provide a heat pump system that allows the flow rate of a heat medium to be acquired with accuracy.

### Solution to Problem

A heat pump system according to an embodiment of the present disclosure is configured to, by use of a heat medium, regulate a temperature of an object to be temperature-regulated. The heat pump system includes a heat source apparatus, a load apparatus, and a flow-rate acquisition device. The heat source apparatus is configured to regulate a temperature of the heat medium. The load apparatus is connected to the heat source apparatus via a heat medium pipe to form a heat medium circuit together with the heat source apparatus. The load apparatus is configured to regulate the temperature of the object by use of the heat medium temperature-regulated in the heat source apparatus. The flow-rate acquisition device is configured to measure a flow rate of the heat medium, or a physical quantity for calculating the flow rate of the heat medium. The heat source apparatus includes a compressor, a heat medium heat exchanger, and a controller. The compressor is configured to compress refrigerant. The heat medium heat exchanger is connected to the load apparatus via the heat medium pipe, and connected to the compressor via a refrigerant pipe. The heat medium heat exchanger is configured to exchange heat between the refrigerant and the heat medium. The controller is configured to control the heat source apparatus. The controller includes adjustment calculation circuitry, and control calculation circuitry. The adjustment calculation circuitry is configured to, when a first condition, which is predetermined, is met, calculate an amount of adjustment by use of an operating frequency of the compressor. The amount of adjustment is an amount of adjustment for adjusting a first flow rate of the heat medium. The first flow rate is based on a measurement result acquired from the flow-rate acquisition device. The control calculation circuitry is configured to, by use of the amount of adjustment, adjust the first flow rate of the heat medium that is based on the measurement result acquired from the flow-rate acquisition device, to an adjusted first flow rate.

### Advantageous Effects of Invention

With the heat pump system according to an embodiment of the present disclosure, when the first condition is met, the adjustment calculation circuitry calculates, by use of the operating frequency of the compressor, an amount of adjustment for adjusting the first flow rate, which is a flow rate based on a measurement result acquired from the flow-rate acquisition device. The control calculation circuitry then adjusts, by use of the amount of adjustment, the first flow rate that is based on the measurement result acquired from the flow-rate acquisition device. This makes it possible to acquire the flow rate of the heat medium with accuracy even when the accuracy of the flow-rate acquisition device decreases.

### Brief Description of Drawings

[Fig. 1] Fig. 1 schematically illustrates an example of the configuration of a heat pump system according to Embodiment 1.
[Fig. 2] Fig. 2 is a block diagram illustrating an example of the configuration of a controller according to Embodiment 1.
[Fig. 3] Fig. 3 is a pressure-enthalpy diagram representing the relationship between the pressure and enthalpy of an azeotropic refrigerant used in the related art.
[Fig. 4] Fig. 4 is a pressure-enthalpy diagram representing the relationship between the pressure and enthalpy of a zeotropic refrigerant according to Embodiment 1.
[Fig. 5] Fig. 5 illustrates an example of the hardware configuration of a controller 18 according to Embodiment 1.
[Fig. 6] Fig. 6 is a flowchart of an exemplary calculation process to be executed by the controller according to Embodiment 1 for calculating an amount of adjustment.
[Fig. 7] Fig. 7 is a flowchart of an exemplary control process to be executed by the controller according to Embodiment 1.
[Fig. 8] Fig. 8 illustrates an example of the configuration of a heat pump system according to Embodiment 2.
[Fig. 9] Fig. 9 illustrates an example of the configuration of a heat pump system according to Embodiment 3.
[Fig. 10] Fig. 10 illustrates an example of the configuration of a heat pump system according to Embodiment 4.
[Fig. 11] Fig. 11 is a block diagram illustrating an example of the configuration of a controller according to Embodiment 4.
[Fig. 12] Fig. 12 is a flowchart of an exemplary calculation process to be executed by the controller according to Embodiment 4 for calculating an amount of correction.
[Fig. 13] Fig. 13 is a flowchart of an exemplary calculation process to be executed by the controller according to Embodiment 4 for calculating an amount of adjustment.
[Fig. 14] Fig. 14 is a flowchart of an exemplary control process to be executed by the controller according to Embodiment 4.

### Description of Embodiments

Heat pump systems according to embodiments are described below in detail with reference to the drawings.

### Embodiment 1.

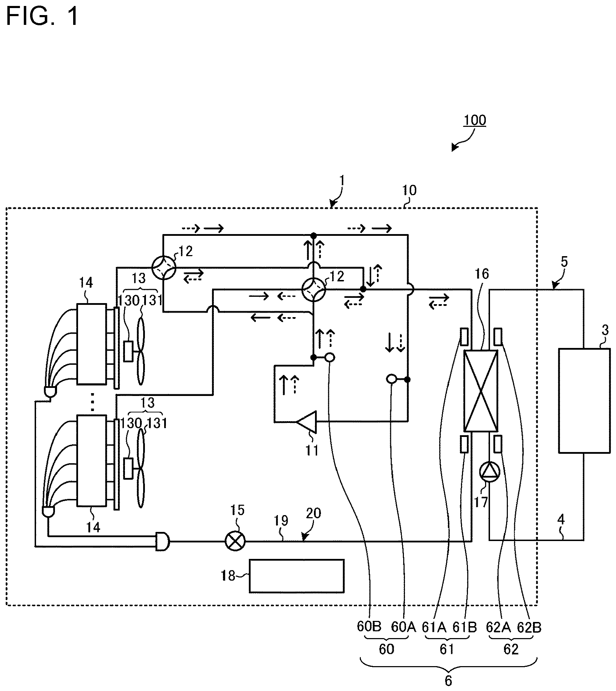

Fig. 1 schematically illustrates an example of the configuration of a heat pump system according to Embodiment 1. A heat pump system 100 includes a heat source apparatus 1, and a load apparatus 3. The heat source apparatus 1 and the load apparatus 3 are connected to each other by a heat medium pipe 4 through which a heat medium is to be passed. A heat medium circuit 5 in which the heat medium circulates is thus formed. The heat medium is, for example, water or brine. For ease of understanding, Embodiment 1 is directed to an exemplary case in which the heat pump system 100 includes a single load apparatus 3. The heat pump system 100 may, however, include a plurality of load apparatuses 3. In this case, the load apparatuses 3 are connected in parallel to the heat source apparatus 1 via the heat medium pipe 4.

The heat source apparatus 1 cools or heats the heat medium. The load apparatus 3 causes heat to be exchanged between the heat medium supplied from the heat source apparatus 1 via the heat medium pipe 4, and an object to be temperature-regulated (hereinafter sometimes referred to simply as "object"), such as air and water, to thereby regulate the temperature of the object.

The heat source apparatus 1 includes the following components inside an exterior housing 10 defining the exterior of the heat source apparatus 1: a compressor 11, one or more flow switching devices 12, one or more heat source air-sending devices 13, one or more heat source heat exchangers 14, an expansion valve 15, a heat medium heat exchanger 16, a pump 17, and a controller 18. The flow switching devices 12 correspond one-to-one to the heat source air-sending devices 13, and the heat source air-sending devices 13 correspond one-to-one to the heat source heat exchangers 14. The compressor 11, the flow switching devices 12, the one or more heat source heat exchangers 14, the expansion valve 15, and the heat medium heat exchanger 16 are connected sequentially by a refrigerant pipe 19 to form a refrigerant circuit 20 in which refrigerant circulates. In the heat medium circuit 5, the heat medium heat exchanger 16 and the pump 17 are connected by the heat medium pipe 4.

The compressor 11 sucks in refrigerant from the refrigerant pipe 19, compresses the sucked refrigerant, and discharges the compressed refrigerant to the refrigerant pipe 19. The compressor 11 is an inverter compressor whose capacity can be controlled by an inverter.

Each of the flow switching devices 12 is, for example, a four-way valve. Each of the flow switching devices 12 switches the directions of refrigerant flow. A flow path of refrigerant will be hereinafter sometimes referred to as refrigerant flow path. A direction in which refrigerant flows will be hereinafter sometimes referred to as flow-path direction. In the heat pump system 100, the process of heating the object and the process of cooling the object can be switched through switching of flow-path directions by the flow switching device 12. In each of the flow switching devices 12 illustrated in Fig. 1, the solid lines each represent the refrigerant flow path for a case in which the object is to be heated, and the dashed lines each represent the refrigerant flow path for a case in which the object is to be cooled. Likewise, the solid arrows adjacent to the refrigerant circuit 20 in Fig. 1 each represent the flow-path direction of the refrigerant in the refrigerant circuit 20 for a case in which the object is to be heated. The dashed arrows adjacent to the refrigerant circuit 20 each represent the flow-path direction of the refrigerant in the refrigerant circuit 20 for a case in which the object is to be cooled.

Each of the heat source air-sending devices 13 includes a heat-source-side driving source 130 such as a fan motor, and a heat-source-side fan 131 such as a propeller fan, a turbo fan, and a sirocco fan. Each of the heat source air-sending devices 13 introduces the air from the outside of the heat source apparatus 1 to the corresponding heat source heat exchanger 14. The heat-source-side driving source 130 according to Embodiment 1 has its rotation frequency controlled by an inverter. Each of the heat source heat exchangers 14 allows heat exchange between air supplied by the corresponding heat source air-sending device 13, and the refrigerant. Each of the heat source air-sending devices 13 sends the air whose heat has been exchanged in the corresponding heat source heat exchanger 14 to the outside of the heat source apparatus 1.

The expansion valve 15 causes incoming refrigerant to decrease in pressure and expand. The expansion valve 15 is, for example, an electric expansion valve capable of adjusting the flow rate of the refrigerant. The heat medium heat exchanger 16 is, for example, a plate heat exchanger. The heat medium heat exchanger 16 allows heat exchange between the refrigerant and the heat medium. In the heat medium heat exchanger 16, the heat medium is heated or cooled through heat exchange with the refrigerant.

The pump 17 causes the heat medium to circulate in the heat medium circuit 5. The pump 17 has its operating frequency varied by an inverter to thereby regulate the flow rate of the heat medium.

The controller 18 controls the compressor 11, the heat source air-sending devices 13, and the pump 17. The controller 18 includes an inverter circuit for controlling each of the compressor 11, the heat source air-sending devices 13, and the pump 17.

Depending on the kind of the heat medium used, the heat medium heat exchanger 16 may become damaged due to freezing of the heat medium. For example, a heat medium such as water increases in volume when frozen. This may cause damage to the interior of the heat medium heat exchanger 16. To address this, the heat pump system 100 is designed such that, when the temperature of the heat medium becomes less than or equal to a predetermined lower limit under, for example, low temperature conditions such as winter, the heat pump system 100 heats the heat medium by running the compressor 11 or other components to thereby reduce potential freezing of the heat medium. However, constantly running the compressor 11 or other components may result in increased power consumption. Accordingly, under low temperature conditions, the heat pump system 100 may, in some cases, keep the pump 17 operating to prevent freezing of the heat medium heat exchanger 16.

Even when the pump 17 is maintained in operation, a decrease in the flow rate of the heat medium in the heat medium circuit 5 may cause an imbalance in the flow rate of the heat medium in the heat medium heat exchanger 16. That is, there is a possibility that the heat medium may have a comparatively high flow rate in one portion of the heat medium heat exchanger 16 while having a comparatively low flow rate in other portions of the heat medium heat exchanger 16. Freezing may occur in portions of the heat medium heat exchanger 16 where the heat medium has a comparatively low flow rate. To prevent freezing of the heat medium heat exchanger 16, the heat medium needs to be distributed appropriately to various portions of the heat medium heat exchanger 16.

For the flow rate of the heat medium in the heat medium circuit 5, a lower limit is determined in advance to ensure appropriate distribution of the heat medium in the heat medium heat exchanger 16. Such a lower limit flow rate will be hereinafter sometimes referred to as threshold flow rate. From the viewpoint of reducing power consumption, the lower the flow rate of the heat medium, the more desirable. From the viewpoint of preventing freezing of the heat medium heat exchanger 16, however, the flow rate of the heat medium needs to be greater than or equal to the threshold flow rate. Accordingly, the heat pump system 100 controls the pump 17 such that the heat medium has a flow rate greater than or equal to the threshold flow rate. For the heat pump system 100, an operating frequency of the pump 17 corresponding to the threshold flow rate is set in advance. The heat pump system 100 causes the pump 17 to operate at an operating frequency greater than or equal to the operating frequency corresponding to the threshold flow rate. The operating frequency of the pump 17 will be hereinafter sometimes referred to as pump frequency.

Even when the pump 17 operates at the same pump frequency, the flow rate of the heat medium may vary due to aging of the pump 17. This may result in the flow rate of the heat medium becoming lower than the threshold flow rate even when the pump 17 operates at a pump frequency greater than or equal to the pump frequency corresponding to the threshold flow rate.

To keep the flow rate of the heat medium greater than or equal to the threshold flow rate while reducing power consumption, it is desired to install a highly accurate flow rate sensor. A flow rate sensor, however, is often expensive. Installing a flow rate sensor thus results in increased cost.

The flow rate of the heat medium can be also measured by, instead of use of a flow rate sensor, a method including disposing pressure sensors in the heat medium circuit 5, one at the inlet of the heat medium heat exchanger 16 and one at the outlet of the heat medium heat exchanger 16, to measure the pressures of the heat medium at these locations, and using the difference between the pressures measured by these pressure sensors. However, scale formation in the heat medium heat exchanger 16, addition of a bypass circuit in the heat medium circuit 5, or other factors may introduce variations in the pressure loss of the heat medium in the heat medium heat exchanger 16. This means that even when a flow rate found by the difference between the pressure of the heat medium in the inlet of the heat medium heat exchanger 16 and the pressure of the heat medium in the outlet of the heat medium heat exchanger 16 is greater than or equal to the threshold flow rate, areas with insufficient flow rate of the heat medium may occur in the heat medium heat exchanger 16. This is explained below in more detail. The flow rate of the heat medium through the heat medium heat exchanger 16 is found by use of the following information: the difference between the pressure of the heat medium in the inlet of the heat medium heat exchanger 16, and the pressure of the heat medium in the outlet of the heat medium heat exchanger 16, and the cross-sectional area of the heat medium pipe 4 at each of the outlet and inlet of the heat medium heat exchanger 16. The flow rate of the heat medium through a flow path in the heat medium heat exchanger 16 is found by use of the following information: the difference between the pressure of the heat medium in the inlet of the flow path, and the pressure of the heat medium in the outlet of the flow path, and the cross-sectional area of the flow path. For the ease of understanding, the following description is directed to an exemplary case in which the heat medium passes through the heat medium heat exchanger 16 at a predetermined flow rate greater than or equal to the threshold flow rate. In this case, even when the flow rate of the heat medium through the heat medium heat exchanger 16 as a whole is greater than or equal to the threshold flow rate, in the heat medium heat exchanger 16, more heat medium is considered to pass through a flow path with a comparatively large width than through a flow path whose width has decreased due to scale formation. This means that even when the flow rate based on the pressure of the heat medium at the outlet of the heat medium heat exchanger 16 and on the pressure of the heat medium at the inlet of the heat medium heat exchanger 16 is greater than or equal to the threshold flow rate, there are areas in the heat medium heat exchanger 16 that may become frozen and damaged due to the flow rate of the heat medium not reaching a required flow rate.

The heat pump system 100 according to Embodiment 1 is designed to reduce potential freezing of the heat medium heat exchanger 16 without use of an expensive dedicated flow rate sensor. A configuration of the heat pump system 100 for achieving this is described below.

The heat pump system 100 includes a flow-rate acquisition device 6 for acquiring the flow rate of the heat medium. The flow-rate acquisition device 6 according to Embodiment 1 includes a refrigerant pressure measurement device 60, a refrigerant temperature measurement device 61, and a heat-medium temperature measurement device 62. The refrigerant pressure measurement device 60 includes a first refrigerant-pressure sensor 60A, and a second refrigerant-pressure sensor 60B. The refrigerant temperature measurement device 61 includes a first refrigerant-temperature sensor 61A, and a second refrigerant-temperature sensor 61B. The heat-medium temperature measurement device 62 includes a first heat-medium temperature sensor 62A, and a second heat-medium temperature sensor 62B.

The first refrigerant-pressure sensor 60A is disposed at a portion of the refrigerant pipe 19 that is located at the suction portion of the compressor 11, and that is located downstream of the heat medium heat exchanger 16 when the operation of cooling the object is being performed. The first refrigerant-pressure sensor 60A measures the pressure of the refrigerant. The second refrigerant-pressure sensor 60B is disposed at a portion of the refrigerant pipe 19 that is located at the discharge portion of the compressor 11, and that is located upstream of the heat medium heat exchanger 16 when the operation of heating the object is being performed. The second refrigerant-pressure sensor 60B measures the pressure of the refrigerant.

The first refrigerant-temperature sensor 61A is disposed at a portion of the refrigerant pipe 19 that is located at the inlet of the heat medium heat exchanger 16 when the operation of heating the object is being performed. The first refrigerant-temperature sensor 61A measures the temperature of the refrigerant. The second refrigerant-temperature sensor 61B is disposed at a portion of the refrigerant pipe 19 that is located at the outlet of the heat medium heat exchanger 16 when the operation of heating the object is being performed. The second refrigerant-temperature sensor 61B measures the temperature of the refrigerant.

The first heat-medium temperature sensor 62A is disposed at a portion of the heat medium pipe 4 at the inlet of the heat medium heat exchanger 16. The first heat-medium temperature sensor 62A measures the temperature of the heat medium. The second heat-medium temperature sensor 62B is disposed at a portion of the heat medium pipe 4 at the outlet of the heat medium heat exchanger 16. The second heat-medium temperature sensor 62B measures the temperature of the heat medium.

The heat pump system 100 according to Embodiment 1 is capable of calculating the flow rate of the heat medium by use of measurement results acquired from the refrigerant pressure measurement device 60, the refrigerant temperature measurement device 61, and the heat-medium temperature measurement device 62. In the following description, measurement results acquired from various sensors included in the flow-rate acquisition device 6 will be referred to as, for example, measurement results acquired from the flow-rate acquisition device 6.

A flow rate based on measurement results acquired from the flow-rate acquisition device 6 may contain an error that can increase due to aging of the flow-rate acquisition device 6 or other factors. Accordingly, the controller 18 adjusts the flow rate calculated based on the measurement results acquired from the flow-rate acquisition device 6. When the adjusted flow rate is less than the threshold flow rate, the controller 18 controls the pump 17 to make the flow rate of the heat medium greater than or equal to the threshold flow rate.

According to Embodiment 1, when a first condition is met, the controller 18 calculates an amount of adjustment for adjusting the flow rate of the heat medium. The first condition is one of the following three conditions. The first one of these conditions is that the current point in time is not within an execution time during which a temperature regulation operation is executed. The second one of these conditions is that the current point in time is within a first time, which is a predetermined time within a time other than the execution time of the temperature regulation operation. The third one of these conditions is that the heat pump system 100 is operated at a load less than a predetermined threshold load. A temperature regulation operation refers to an operation to be executed by the heat pump system 100 for regulating the temperature of the object. In the following description, an operation of the heat pump system 100 in which the controller 18 calculates an amount of adjustment will be sometimes referred to as adjustment operation. The controller 18 adjusts, by use of the amount of adjustment calculated during the adjustment operation, the flow rate calculated based on measurement results acquired from the flow-rate acquisition device 6.

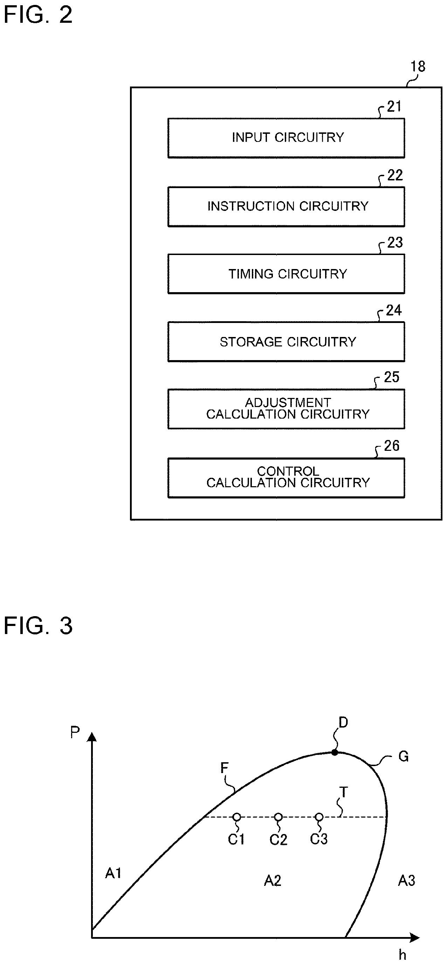

The controller 18 calculates an amount of adjustment, based on the operating frequency of the compressor 11. The controller 18 is described below in more detail. Fig. 2 is a block diagram illustrating an example of the configuration of the controller according to Embodiment 1. The controller 18 includes input circuitry 21, instruction circuitry 22, timing circuitry 23, storage circuitry 24, adjustment calculation circuitry 25, and control calculation circuitry 26.

The input circuitry 21 is connected to the flow-rate acquisition device 6 by a signal line (not illustrated). The input circuitry 21 acquires, from the flow-rate acquisition device 6, measurement results acquired from various sensors such as the first refrigerant-pressure sensor 60A and the second refrigerant-pressure sensor 60B. The input circuitry 21 may be connected to various sensors of the flow-rate acquisition device 6, and may acquire measurement results from the various sensors. Alternatively, the flow-rate acquisition device 6 may include a processing unit (not illustrated) that acquires measurement results from various sensors, and the input circuitry 21 may acquire, from the processing unit, the measurement results acquired from the various sensors. The input circuitry 21 may acquire measurement results from the flow-rate acquisition device 6 via wireless communication.

The instruction circuitry 22 includes an inverter circuit for controlling each of the following components: the compressor 11, the heat source air-sending devices 13, and the pump 17. The timing circuitry 23 is circuitry for measuring time, such as a real time clock (RTC). The timing circuitry 23 may acquire information representative of a time of day from an external source.

The storage circuitry 24 stores a threshold flow rate. When the adjustment operation is to be executed within a time other than the execution time of the temperature regulation operation, the storage circuitry 24 stores at least one of the following times: the execution time of the temperature regulation operation, and the time other than the execution time of the temperature regulation operation. When the adjustment operation is to be executed within the first time, the storage circuitry 24 stores the first time. The time to be stored in the storage circuitry 24 may be input to the controller 18 by, for example, a user or an operator, or may be learned by the controller 18 based on, for example, the operation load.

The adjustment calculation circuitry 25 calculates an amount of adjustment when the first condition is met. When the storage circuitry 24 stores at least one of the execution time of the temperature regulation operation, and the time other than the execution time of the temperature regulation operation, the adjustment calculation circuitry 25 refers to the storage circuitry 24, and executes a calculation process of an amount of adjustment within the time other than the execution time of the temperature regulation operation. When the storage circuitry 24 stores the first time, the adjustment calculation circuitry 25 refers to the storage circuitry 24, and executes a calculation process of an amount of adjustment within the first time. The adjustment calculation circuitry 25 stores the calculated amount of adjustment into the storage circuitry 24.

Detailed description is made below on a calculation process to be executed by the adjustment calculation circuitry 25 for calculating an amount of adjustment. According to Embodiment 1, the refrigerant used is a zeotropic refrigerant. A zeotropic refrigerant is a mixture of a plurality of kinds of refrigerant, with the phase change between a liquid and a gas occurring at different temperatures for different kinds of refrigerant. An azeotropic refrigerant, by contrast, is made up of only kind of refrigerant, with its temperature being invariant with changes in the proportion of the liquid phase resulting from a phase change.

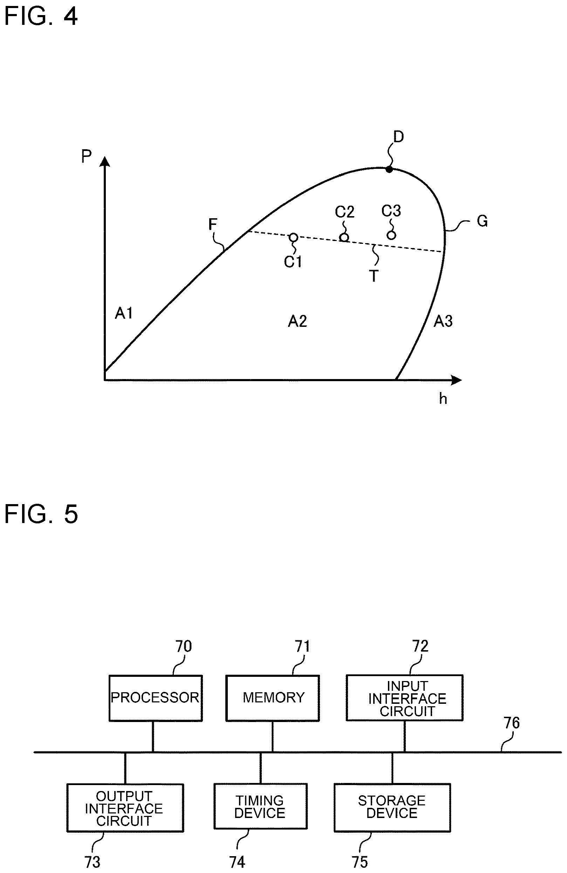

Fig. 3 is a pressure-enthalpy diagram representing the relationship between the pressure and enthalpy of an azeotropic refrigerant used in the related art. Fig. 4 is a pressure-enthalpy diagram representing the relationship between the pressure and enthalpy of the zeotropic refrigerant according to Embodiment 1. In Figs. 3 and 4, the horizontal axis represents enthalpy h, and the vertical axis represents pressure P. The relationship between the enthalpy h and the pressure P of the refrigerant is represented by use of a saturated liquid line F and a saturated vapor line G, which are each located on the corresponding side of a critical point D. A region A1 represents a liquid region. A region A2 represents a two-phase region. A region A3 represents a gas region. A point C1, a point C2, and a point C3 represent states of the enthalpy h and the pressure P of the refrigerant. When in a two-phase condition, the refrigerant changes between the following states: the state represented by the point C1, the state represented by the point C2, and the state represented by the point C3. In each of these states, the refrigerant has a liquid phase in a different proportion, and possesses a different amount of heat. The amount of heat corresponds to the enthalpy h. A dashed line T is an isothermal line representing states of the refrigerant at a temperature equal to the temperature of the refrigerant in the state represented by the point C1.

As illustrated in Fig. 3, for the azeotropic refrigerant, the point C1, the point C2, and the point C3 are located on the dashed line T. Thus, as long as the azeotropic refrigerant is in a two-phase condition, the azeotropic refrigerant does not change in temperature even when its state changes. This means that when the azeotropic refrigerant is in a two-phase condition, it is not possible to determine the amount of heat possessed by the azeotropic refrigerant from the temperature of the azeotropic refrigerant.

By contrast, when in a two-phase condition, the zeotropic refrigerant has a temperature that varies with the proportion of the liquid phase. As illustrated in Fig. 4, the point C2 and the point C3 are not located on the dashed line T, which means that the temperature of the zeotropic refrigerant changes as the refrigerant changes its states. Thus, measuring the temperature of the zeotropic refrigerant makes it possible to determine the proportion of the liquid phase, and consequently the amount of heat possessed by the zeotropic refrigerant. The value of the enthalpy h of the zeotropic refrigerant is thus obtained. From the obtained value of the enthalpy h, the capacity of the heat source apparatus 1 is obtained. The capacity in this case means, for example, a capacity such as heating capacity, cooling capacity, and refrigeration capacity, and corresponds to the amount of heat given by the refrigerant to the heat medium per unit time. The capacity corresponds to the product of the amount of change in the enthalpy h, and the flow rate of the refrigerant. The flow rate of the heat medium can be calculated by use of the following information: the temperature of the heat medium, the specific heat of the heat medium, and capacity.

Description is made with reference back to Figs. 1 and 2. The adjustment calculation circuitry 25 determines the enthalpy value of the refrigerant based on the following information: a pressure of the refrigerant measured by the refrigerant pressure measurement device 60, and a temperature of the refrigerant measured by the refrigerant temperature measurement device 61. In this case, the adjustment calculation circuitry 25 uses one of the following pressures as the pressure of the refrigerant measured by the refrigerant pressure measurement device 60: a pressure measured by the first refrigerant-pressure sensor 60A, and a pressure measured by the second refrigerant-pressure sensor 60B. When the refrigerant flows as indicated by the dashed arrows illustrated in Fig. 1, the pressure measured by the first refrigerant-pressure sensor 60A corresponds to the pressure of the refrigerant in the heat medium heat exchanger 16. Thus, when the refrigerant flows as indicated by the dashed arrows illustrated in Fig. 1, the pressure measured by the first refrigerant-pressure sensor 60A is used by the adjustment calculation circuitry 25 in determining the enthalpy value. By contrast, when the refrigerant flows as indicated by the solid arrows illustrated in Fig. 1, the pressure measured by the second refrigerant-pressure sensor 60B corresponds to the pressure of the refrigerant in the heat medium heat exchanger 16. Thus, when the refrigerant flows as indicated by the solid arrows illustrated in Fig. 1, the pressure measured by the second refrigerant-pressure sensor 60B is used by the adjustment calculation circuitry 25 in determining the enthalpy value. In determining the enthalpy value, the adjustment calculation circuitry 25 uses the difference between the temperature measured by the first refrigerant-temperature sensor 61A, and the temperature measured by the second refrigerant-temperature sensor 61B. The temperature difference corresponds to the amount of heat exchanged in the heat medium heat exchanger 16 between the refrigerant and the heat medium when the pressure of the refrigerant is specified. The adjustment calculation circuitry 25 calculates capacity based on the determined enthalpy value, and the flow rate of the refrigerant. The flow rate of the refrigerant can be calculated based on the operating frequency of the compressor 11. It is also possible, however, to provide the refrigerant circuit 20 with a sensor (not illustrated) for measuring the flow rate of the refrigerant, and obtain the flow rate of the refrigerant from the sensor. The capacity based on measurement results acquired from the flow-rate acquisition device 6 will be hereinafter sometimes referred to as first capacity. The operating frequency of the compressor 11 will be hereinafter sometimes referred to as compressor frequency.

The adjustment calculation circuitry 25 calculates the flow rate of the heat medium by use of the following information: the difference between a temperature measured by the first heat-medium temperature sensor 62A and a temperature measured by the second heat-medium temperature sensor 62B, and the first capacity. The flow rate of the heat medium based on the measurement results acquired from the flow-rate acquisition device 6 will be hereinafter sometimes referred to as first flow rate.

In the heat medium heat exchanger 16, the amount of heat gained by the heat medium equals the amount of heat given by the refrigerant to the heat medium. However, the first capacity, which is a capacity based on measurement results acquired from the flow-rate acquisition device 6, can differ from the amount of heat actually gained by the heat medium per unit time, due to factors such as aging of the flow-rate acquisition device 6. Consequently, the first flow rate based on measurement results acquired from the flow-rate acquisition device 6 can differ from the actual flow rate of the heat medium.

The adjustment calculation circuitry 25 calculates an amount of adjustment that allows the controller 18 to acquire the flow rate of the heat medium with accuracy by use of measurement results acquired from the flow-rate acquisition device 6. The amount of adjustment is used to adjust the first flow rate, which is a flow rate based on measurement results acquired from the flow-rate acquisition device 6, to the actual flow rate of the heat medium.

Description is made below on calculation of an amount of adjustment. The adjustment calculation circuitry 25 calculates the amount of heat given by the refrigerant to the heat medium, by use of the compressor frequency. The amount of heat given by the refrigerant to the heat medium is obtained by use of the following information: the temperature of the refrigerant in the inlet of the heat medium heat exchanger 16, the temperature of the refrigerant in the outlet of the heat medium heat exchanger 16, and the flow rate of the refrigerant. The temperature of the refrigerant in the inlet of the heat medium heat exchanger 16, and the temperature of the refrigerant in the outlet of the heat medium heat exchanger 16 are obtained from the refrigerant temperature measurement device 61. The temperature of the refrigerant in the inlet of the heat medium heat exchanger 16, and the temperature of the refrigerant in the outlet of the heat medium heat exchanger 16 may be obtained by other methods. The flow rate of the refrigerant is determined based on the compressor frequency. The compressor frequency is obtained from the instruction circuitry 22.

The adjustment calculation circuitry 25 calculates a refrigerant temperature difference, which is the difference between the temperature of the refrigerant in the inlet of the heat medium heat exchanger 16, and the temperature of the refrigerant in the outlet of the heat medium heat exchanger 16. The adjustment calculation circuitry 25 calculates the amount of heat given by the refrigerant to the heat medium per unit time, that is, capacity, by use of the refrigerant temperature difference and the compressor frequency. The above-mentioned capacity obtained by use of the compressor frequency will be hereinafter sometimes referred to as second capacity.

The adjustment calculation circuitry 25 calculates the flow rate of the heat medium by use of the following information: the temperature of the heat medium in the inlet of the heat medium heat exchanger 16, the temperature of the heat medium in the outlet of the heat medium heat exchanger 16, and the second capacity. At this time, the adjustment calculation circuitry 25 calculates a heat-medium temperature difference, which is the difference between the temperature of the heat medium in the inlet of the heat medium heat exchanger 16, and the temperature of the heat medium in the outlet of the heat medium heat exchanger 16. The adjustment calculation circuitry 25 may acquire the temperature of the heat medium in the inlet of the heat medium heat exchanger 16, and the temperature of the heat medium in the outlet of the heat medium heat exchanger 16 from the heat-medium temperature measurement device 62, or may acquire these temperatures by other methods. The adjustment calculation circuitry 25 calculates the flow rate of the heat medium by use of the following information: the second capacity, the heat-medium temperature difference, and the specific heat of the heat medium. The flow rate of the heat medium based on the second capacity will be hereinafter sometimes referred to as second flow rate.

The adjustment calculation circuitry 25 compares the first flow rate and the second flow rate with each other. When the second flow rate is equal to the actual flow rate of the heat medium, and the flow-rate acquisition device 6 has a high measurement accuracy, the first flow rate and the second flow rate should be equal to each other, or the deviation of the first flow rate from the second flow rate should be small. In some cases, however, degradation of the flow-rate acquisition device 6 may cause the first flow rate to deviate from the second flow rate. The adjustment calculation circuitry 25 calculates an amount of adjustment based on the first flow rate and the second flow rate. For example, the adjustment calculation circuitry 25 determines, as an amount of adjustment, the difference between the first flow rate and the second flow rate. The adjustment calculation circuitry 25 may calculate an amount of adjustment through comparison between the first capacity and the second capacity, instead of comparison between the first flow rate and the second flow rate. In this case, the adjustment calculation circuitry 25 calculates the difference between the first capacity and the second capacity, and calculates an amount of adjustment by use of the following information: the calculated difference, the heat-medium temperature difference, and the specific heat of the heat medium.

The adjustment calculation circuitry 25 stores the calculated amount of adjustment into the storage circuitry 24. Each time the adjustment calculation circuitry 25 calculates an amount of adjustment, the adjustment calculation circuitry 25 updates the amount of adjustment previously stored in the storage circuitry 24.

To obtain an accurate amount of adjustment, the second flow rate needs to be obtained with high accuracy. The controller 18 according to Embodiment 1 is configured such that during the adjustment operation, the controller 18 causes the compressor 11 to operate at a predetermined compressor frequency to thereby reduce an error in the second flow rate. This is explained below in more detail.

As described above, the flow rate of the refrigerant varies with compressor frequency. In this regard, there is a range of compressor frequencies for which the flow rate of the refrigerant is obtained with accuracy, and a range of compressor frequencies for which the flow rate of the refrigerant is not obtained with accuracy. According to Embodiment 1, compressor frequencies for which the flow rate of the refrigerant is obtained with accuracy are previously determined by an experiment or other methods, and set in the controller 18. Such a compressor frequency set as described above will be hereinafter sometimes referred to as first frequency. The first frequency is determined such that the flow rate of the refrigerant based on the first frequency has an error from the actual refrigerant flow rate that is within a tolerance. The actual refrigerant flow rate refers to the actual flow rate of the refrigerant when the compressor 11 is operated at the first frequency. The tolerance is, for example, 3[%] to 5[%].

The heat pump system 100 executes the adjustment operation with the compressor frequency set at the first frequency. That is, with the instruction circuitry 22 causing the compressor 11 to operate at the first frequency, the adjustment calculation circuitry 25 calculates the first capacity, the second capacity, and other values, and calculates an amount of adjustment. As a result, the second capacity and the second flow rate are obtained with accuracy, and the amount of adjustment is obtained with accuracy.

The controller 18 may, for example, correct the first frequency for cases such as when the flow-rate acquisition device 6 has been changed to a new one by replacement or other methods and the compressor 11 has been used for a long time. In such cases, the controller 18 may correct the second flow rate by use of the first flow rate, and correct the first frequency based on the corrected second flow rate. Alternatively, the controller 18 may correct the second capacity by use of the first capacity, and correct the first frequency based on the corrected second capacity.

The control calculation circuitry 26 calculates the first flow rate based on measurement results acquired from the flow-rate acquisition device 6. The control calculation circuitry 26 adjusts the calculated first flow rate by use of an amount of adjustment stored in the storage circuitry 24. The control calculation circuitry 26 then determines whether the adjusted first flow rate is greater than or equal to the threshold flow rate.

When the adjusted first flow rate is less than the threshold flow rate, the instruction circuitry 22 controls the pump 17 such that the flow rate of the heat medium in the heat medium circuit 5 becomes greater than or equal to the threshold flow rate.

Description is made below on the hardware configuration of the controller 18 according to Embodiment 1. Fig. 5 illustrates an example of the hardware configuration of the controller 18 according to Embodiment 1. The controller 18 may include the following and other components: a processor 70 such as a central processing unit (CPU) and a micro-processing unit (MPU), a memory 71 such as a read only memory (ROM) and a random access memory (RAM), an input interface circuit 72, an output interface circuit 73, a timing device 74, and a storage device 75. The timing device 74 may be, for example, an RTC, or a communication interface circuit for receiving information representing a time of day from an external source. The storage device 75 may be, for example, a hard disk drive (HDD), or a universal serial bus (USB) memory. The processor 70, the memory 71, the input interface circuit 72, the output interface circuit 73, the timing device 74, and the storage device 75 are interconnected by a bus 76.

The respective functions of the adjustment calculation circuitry 25 and the control calculation circuitry 26 can be implemented by the processor 70 reading and executing various programs stored in the memory 71. The function of the input circuitry 21 can be implemented by the input interface circuit 72. Alternatively, the function of the input circuitry 21 may be implemented by a communication interface circuit. In this case, the input circuitry 21 is capable of acquiring measurement results from the flow-rate acquisition device 6 via wireless communication. The function of the instruction circuitry 22 can be implemented by the output interface circuit 73, or by a combination of the processor 70, the memory 71, and the output interface circuit 73. The function of the timing circuitry 23 can be implemented by the timing device 74. Alternatively, the function of the timing circuitry 23 can be implemented by the processor 70 and the memory 71, instead of by the timing device 74. When the function of the timing circuitry 23 is to be implemented by the processor 70 and the memory 71, the timing circuitry 23 measures time by use of software. In this case, the controller 18 may include no timing device 74. The function of the storage circuitry 24 can be implemented by the storage device 75. Alternatively, the function of the storage circuitry 24 may be implemented by the memory 71. In this case, the controller 18 may include no storage device 75.

All or some of the functions of the controller 18 may be implemented by use of, instead of the hardware configuration mentioned above, a dedicated hardware component such as a complex programmable logic device (CPLD) and a field programmable gate array (FPGA).

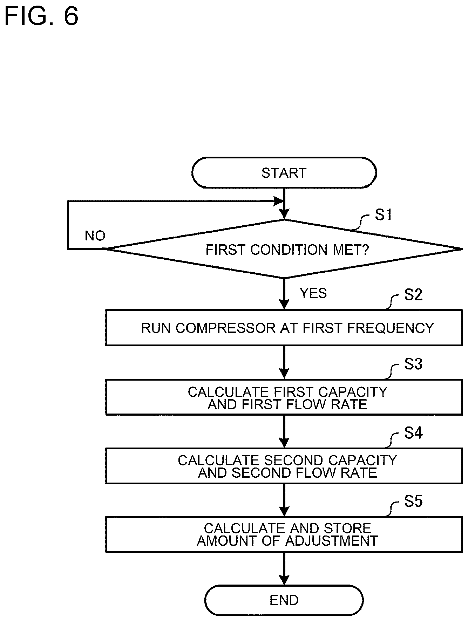

Description is made below on a calculation process to be executed by the controller 18 according to Embodiment 1 for calculating an amount of adjustment. Fig. 6 is a flowchart of an exemplary calculation process to be executed by the controller according to Embodiment 1 for calculating an amount of adjustment. At step S1, the controller 18 determines whether a predetermined first condition is met. When the first condition is not met (step S1: NO), the controller 18 returns the calculation process to step S1.

When the first condition is met (step S1: YES), at step S2, the instruction circuitry 22 causes the compressor 11 to operate at the first frequency. At step S3, the adjustment calculation circuitry 25 calculates the first capacity and the first flow rate, based on measurement results acquired from the flow-rate acquisition device 6 via the input circuitry 21. At step S4, the adjustment calculation circuitry 25 calculates the second capacity and the second flow rate by use of the first frequency acquired from the instruction circuitry 22. Steps S3 and S4 may be executed in the reverse order, or may be executed in parallel. The adjustment calculation circuitry 25 may, at step S3, calculate only the first capacity without calculating the first flow rate. The adjustment calculation circuitry 25 may, at step S4, calculate only the second capacity without calculating the second flow rate.

At step S5, the adjustment calculation circuitry 25 calculates an amount of adjustment through comparison between the first flow rate and the second flow rate, or through comparison between the first capacity and the second capacity. The adjustment calculation circuitry 25 then stores the calculated amount of adjustment into the storage circuitry 24. After step S5, the controller 18 ends the calculation process for calculating an amount of adjustment.

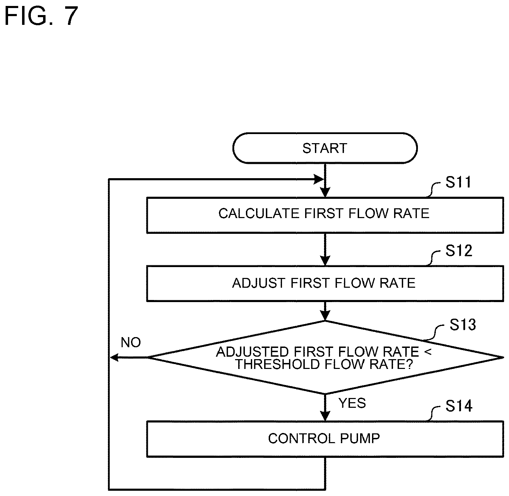

Description is made below on a control process to be executed by the controller 18 according to Embodiment 1. Fig. 7 is a flowchart of an exemplary control process to be executed by the controller according to Embodiment 1. At step S11, the control calculation circuitry 26 calculates the first flow rate, based on measurement results acquired from the flow-rate acquisition device 6 via the input circuitry 21. At step S12, the control calculation circuitry 26 adjusts the calculated first flow rate by use of an amount of adjustment stored in the storage circuitry 24.

At step S13, the control calculation circuitry 26 determines whether the adjusted first flow rate is less than the threshold flow rate. When the adjusted first flow rate is greater than or equal to the threshold flow rate (step S13: NO), the controller 18 returns the control process to step S11. The controller 18 may return the control process to step S11 after a predetermined second time elapses from the execution of step S13.

When the adjusted first flow rate is less than the threshold flow rate (step S13: YES), at step S14, the instruction circuitry 22 controls the pump 17 to make the flow rate of the heat medium greater than or equal to the threshold flow rate. After step S14, the controller 18 returns the process to step S11. The controller 18 may return the control process to step S11 after a predetermined third time elapses from the execution of step S14.

Description is made below on effects provided by the heat pump system 100 according to Embodiment 1. The heat pump system 100 according to Embodiment 1 is configured to regulate a temperature of an object to be temperature-regulated. The heat pump system 100 includes the heat source apparatus 1, the load apparatus 3, and the flow-rate acquisition device 6. The heat source apparatus 1 is configured to regulate a temperature of the heat medium. The load apparatus 3 is connected to the heat source apparatus 1 via the heat medium pipe 4 to form the heat medium circuit 5 together with the heat source apparatus 1. The load apparatus 3 is configured to regulate the temperature of the object by use of the heat medium temperature-regulated in the heat source apparatus 1. The flow-rate acquisition device 6 is configured to measure a flow rate of the heat medium, or a physical quantity for calculating the flow rate of the heat medium. The heat source apparatus 1 includes the compressor 11, the heat medium heat exchanger 16, and the controller 18. The compressor 11 is configured to compress refrigerant. The heat medium heat exchanger 16 is connected to the load apparatus 3 via the heat medium pipe 4, and connected to the compressor 11 via the refrigerant pipe 19. The heat medium heat exchanger 16 is configured to exchange heat between the refrigerant and the heat medium. The controller 18 includes the adjustment calculation circuitry 25, and the control calculation circuitry 26. The adjustment calculation circuitry 25 is configured to, when a predetermined first condition is met, calculate an amount of adjustment by use of a compressor frequency. The amount of adjustment is an amount of adjustment for adjusting the first flow rate of the heat medium. The first flow rate is based on measurement results acquired from the flow-rate acquisition device 6. The control calculation circuitry 26 is configured to, by use of the amount of adjustment, adjust the first flow rate of the heat medium that is based on the measurement results acquired from the flow-rate acquisition device 6, to an adjusted first flow rate.

The accuracy of the flow-rate acquisition device 6 may decrease due to aging. According to the configuration mentioned above, the adjustment calculation circuitry 25 calculates an amount of adjustment for adjusting the first flow rate, by use of the compressor frequency. The control calculation circuitry 26 then adjusts the first flow rate, which is based on the measurement results acquired from the flow-rate acquisition device 6, by use of the amount of adjustment. This allows the heat pump system 100 to acquire the flow rate of the heat medium with accuracy even when the accuracy of the flow-rate acquisition device 6 decreases.

According to Embodiment 1, the first condition is one of the following three conditions. The first one of these conditions is that the current point in time is not within the execution time during which the temperature regulation operation is executed. The second one of these conditions is that the current point in time is within the first time, which is a time within a time other than the execution time of the temperature regulation operation. The third one of these conditions is that the heat pump system 100 is operated at a load less than a predetermined threshold load. The adjustment calculation circuitry 25 calculates the amount of adjustment within a time other than the execution time of the temperature regulation operation, or within a time when the heat pump system 100 is operated at a comparatively low load. This allows the heat pump system 100 to efficiently execute the temperature regulation operation.

According to Embodiment 1, the controller 18 includes the storage circuitry 24, and the timing circuitry 23. The storage circuitry 24 is configured to store at least one of the execution time of the temperature regulation operation, and the time other than the execution time. The timing circuitry 23 is configured to measure time. The adjustment calculation circuitry 25 is capable of, by referring to the storage circuitry 24, determining whether the current time as measured by the timing circuitry 23 is within the time other than the execution time of the temperature regulation operation. This allows the adjustment calculation circuitry 25 to not calculate the amount of adjustment within the execution time of the temperature regulation operation, and to calculate the amount of adjustment within the time other than the execution time of the temperature regulation operation. The adjustment calculation circuitry 25 is thus capable of executing the calculation process of the amount of adjustment without hindering the temperature regulation operation. Therefore, the efficiency of temperature regulation by the heat pump system 100 is maintained.

According to Embodiment 1, the controller 18 includes the storage circuitry 24, and the timing circuitry 23. The storage circuitry 24 is configured to store the first time, which is a time within the time other than the execution time of the temperature regulation operation. The timing circuitry 23 is configured to measure time. The adjustment calculation circuitry 25 is capable of, by referring to the storage circuitry 24, determining whether the current time as measured by the timing circuitry 23 is within the first time. This allows the adjustment calculation circuitry 25 to not calculate the amount of adjustment within the execution time of the temperature regulation operation, and to calculate the amount of adjustment within the first time, which is a time within the time other than the execution time of the temperature regulation operation. The adjustment calculation circuitry 25 is thus capable of executing the calculation process of the amount of adjustment without hindering the temperature regulation operation. Therefore, the efficiency of temperature regulation by the heat pump system 100 is maintained.

According to Embodiment 1, the flow-rate acquisition device 6 includes the refrigerant pressure measurement device 60, the refrigerant temperature measurement device 61, and the heat-medium temperature measurement device 62. The refrigerant pressure measurement device 60 is configured to measure a pressure of the refrigerant in the suction portion of the compressor 11, and a pressure of the refrigerant in the discharge portion of the compressor 11. The refrigerant temperature measurement device 61 is configured to measure a temperature of the refrigerant in the inlet of the heat medium heat exchanger 16, and a temperature of the refrigerant in the outlet of the heat medium heat exchanger 16. The heat-medium temperature measurement device 62 is configured to measure a temperature of the heat medium in the inlet of the heat medium heat exchanger 16, and a temperature of the heat medium in the outlet of the heat medium heat exchanger 16. According to Embodiment 1, the refrigerant is a zeotropic refrigerant. The adjustment calculation circuitry 25 is configured to calculate the first capacity, which corresponds to an amount of heat given by the refrigerant to the heat medium. The first capacity is based on measurement results acquired from the refrigerant pressure measurement device 60 and on measurement results acquired from the refrigerant temperature measurement device 61. The adjustment calculation circuitry 25 is configured to, based on the measurement results acquired from the heat-medium temperature measurement device 62, and on the first capacity, calculate the first flow rate. The adjustment calculation circuitry 25 is configured to calculate the second capacity, which corresponds to an amount of heat given by the refrigerant to the heat medium. The second capacity is based on the compressor frequency. The adjustment calculation circuitry 25 is configured to make a comparison between the second flow rate and the first flow rate, and based on the result of the comparison, calculate the amount of adjustment. The second flow rate is a flow rate of the heat medium based on the second capacity. The heat pump system 100 calculates the amount of adjustment by use of the first capacity and the second capacity each corresponding to the amount of heat given by the refrigerant to the heat medium, rather than the pressure of the heat medium in the outlet of the heat medium heat exchanger 16 and the pressure of the heat medium in the inlet of the heat medium heat exchanger 16. This allows the flow rate of the heat medium to be acquired with high accuracy, even when variations occur in the pressure loss of the heat medium in the heat medium heat exchanger 16. The flow-rate acquisition device 6 according to Embodiment 1 does not include an expensive flow rate sensor. This allows for reduced cost.

According to Embodiment 1, the flow-rate acquisition device 6 includes the refrigerant pressure measurement device 60, the refrigerant temperature measurement device 61, and the heat-medium temperature measurement device 62. The refrigerant pressure measurement device 60 is configured to measure a pressure of the refrigerant in the suction portion of the compressor 11, and a pressure of the refrigerant in the discharge portion of the compressor 11. The refrigerant temperature measurement device 61 is configured to measure a temperature of the refrigerant in the inlet of the heat medium heat exchanger 16, and a temperature of the refrigerant in the outlet of the heat medium heat exchanger 16. The heat-medium temperature measurement device 62 is configured to measure a temperature of the heat medium in the inlet of the heat medium heat exchanger 16, and a temperature of the heat medium in the outlet of the heat medium heat exchanger 16. According to Embodiment 1, the refrigerant is a zeotropic refrigerant. The adjustment calculation circuitry 25 is configured to calculate the first capacity, which corresponds to an amount of heat given by the refrigerant to the heat medium. The first capacity is based on measurement results acquired from the refrigerant pressure measurement device 60 and on measurement results acquired from the refrigerant temperature measurement device 61. The adjustment calculation circuitry 25 is configured to calculate the second capacity, which corresponds to an amount of heat given by the refrigerant to the heat medium. The second capacity is based on the compressor frequency. The adjustment calculation circuitry 25 is configured to make a comparison between the first capacity and the second capacity, and based on the result of the comparison and on measurement results acquired from the heat-medium temperature measurement device 62, calculate the amount of adjustment. The heat pump system 100 calculates the amount of adjustment by use of the first capacity and the second capacity each corresponding to the amount of heat given by the refrigerant to the heat medium, rather than the pressure of the heat medium in the outlet of the heat medium heat exchanger 16 and the pressure of the heat medium in the inlet of the heat medium heat exchanger 16. This allows the flow rate of the heat medium to be acquired with high accuracy, even when variations occur in the pressure loss of the heat medium in the heat medium heat exchanger 16. The flow-rate acquisition device 6 according to Embodiment 1 does not include an expensive flow rate sensor. This allows for reduced cost.

According to Embodiment 1, the controller 18 is configured to, when the first condition is met, cause the compressor 11 to operate at a predetermined first frequency. The first frequency is an operating frequency of the compressor 11 for acquiring a flow rate of the refrigerant within a predetermined tolerance. The adjustment calculation circuitry 25 is thus capable of calculating the second capacity and the second flow rate with high accuracy. This allows the adjustment calculation circuitry 25 to calculate the amount of adjustment with high accuracy. The configuration mentioned above therefore allows the heat pump system 100 to acquire the flow rate of the heat medium with high accuracy.

According to Embodiment 1, the heat pump system 100 further includes the pump 17. The pump 17 is connected to the heat medium heat exchanger 16 and the load apparatus 3 via the heat medium pipe 4. The pump 17 is configured to cause the heat medium to circulate in the heat medium circuit 5. The control calculation circuitry 26 is configured to determine whether the adjusted first flow rate is less than a threshold flow rate. The threshold flow rate is previously determined to prevent freezing of the heat medium heat exchanger 16. The controller 18 further includes the instruction circuitry 22. The instruction circuitry 22 is configured to, when the adjusted first flow rate is determined to be less than the threshold flow rate, control the pump 17 to make the flow rate of the heat medium greater than or equal to the threshold flow rate. When the adjusted first flow rate, which has been acquired with high accuracy as the flow rate of the heat medium, is less than the threshold flow rate, the instruction circuitry 22 controls the pump 17 to make the flow rate of the heat medium greater than or equal to the threshold flow rate. This allows the heat pump system 100 to reduce potential freezing of the heat medium heat exchanger 16 with improved reliability.

### Embodiment 2.

Embodiment 2 is directed to allowing faster calculation of the flow rate of the heat medium. The configuration of a heat pump system 200 according to Embodiment 2 is described below. In Embodiment 2, components similar to the components described above with reference to Embodiment 1 are designated by the same reference signs. In Embodiment 2, configurations similar to the configurations according to Embodiment 1, and functions and other features similar to the functions and other features according to Embodiment 1 are not described unless specific circumstances require otherwise.

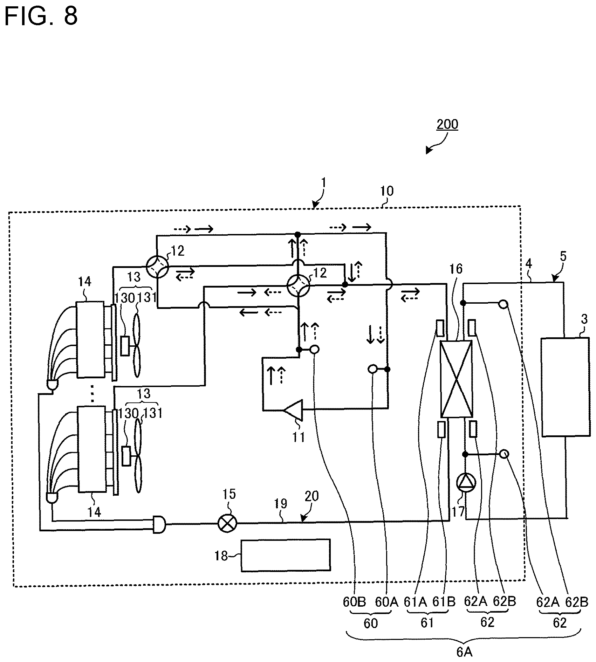

Fig. 8 illustrates an example of the configuration of the heat pump system according to Embodiment 2. The heat pump system 200 according to Embodiment 2 includes a flow-rate acquisition device 6A. The flow-rate acquisition device 6A includes a heat-medium pressure measurement device 63, in addition to the refrigerant pressure measurement device 60, the refrigerant temperature measurement device 61, and the heat-medium temperature measurement device 62. The heat-medium pressure measurement device 63 includes a first heat-medium pressure sensor 63A, and a second heat-medium pressure sensor 63B.

The first heat-medium pressure sensor 63A is disposed at a portion of the heat medium pipe 4 at the inlet of the heat medium heat exchanger 16. The first heat-medium pressure sensor 63A measures the pressure of the heat medium. The second heat-medium pressure sensor 63B is disposed at a portion of the heat medium pipe 4 at the outlet of the heat medium heat exchanger 16. The second heat-medium pressure sensor 63B measures the pressure of the heat medium. The input circuitry 21 acquires measurement results from the first heat-medium pressure sensor 63A and the second heat-medium pressure sensor 63B.

When a predetermined second condition is met, the controller 18 calculates the first flow rate of the heat medium, based on measurement results acquired from the heat-medium pressure measurement device 63, instead of based on measurement results acquired from the refrigerant pressure measurement device 60, measurement results acquired from the refrigerant temperature measurement device 61, and measurement results acquired from the heat-medium temperature measurement device 62. The second condition is one of the following conditions: the cumulative running time of the heat pump system 200 is less than a predetermined first running time, and the cumulative execution time of the temperature regulation operation is less than a predetermined first execution time. The second condition may be a condition that one of the refrigerant pressure measurement device 60, the refrigerant temperature measurement device 61, and the heat-medium temperature measurement device 62 is in a degraded, abnormal, or malfunctioning state.

When the second condition to be used is the condition that the cumulative running time of the heat pump system 200 is less than the first running time, the controller 18 in this case measures the cumulative running time of the heat pump system 200 up to the current point in time after the heat pump system 200 is run for the first time. When the second condition to be used is the condition that the cumulative execution time of the temperature regulation operation is less than the first execution time, the controller 18 in this case measures the cumulative execution time of the temperature regulation operation up to the current point in time after the temperature regulation operation is executed for the first time. The first running time and the first execution time each represent the time it takes until the error of the first flow rate, which is a flow rate obtained by use of the heat-medium pressure measurement device 63, reaches a predetermined threshold error as variations occur in the pressure loss in the heat medium heat exchanger 16 due to scale formation in the heat medium heat exchanger 16. The starting point of the first running time is when the heat pump system 200 is run for the first time. The starting point of the first execution time is when the temperature regulation operation is executed for the first time. The first running time and the first execution time are determined in advance through an experiment or other methods.

When the second condition to be used is the condition that one of the refrigerant pressure measurement device 60, the refrigerant temperature measurement device 61, and the heat-medium temperature measurement device 62 is in a degraded, abnormal, or malfunctioning state, the heat pump system 200 may determine whether a device such as the refrigerant pressure measurement device 60 and the refrigerant temperature measurement device 61 is in a degraded state based on the age of the device in years. The heat pump system 200 may determine that a device such as the refrigerant pressure measurement device 60 and the refrigerant temperature measurement device 61 is in an abnormal or malfunctioning state, in cases such as when a numerical value obtained by measurement with the device such as the refrigerant pressure measurement device 60 and the refrigerant temperature measurement device 61 exceeds a predetermined range, or when the device such as the refrigerant pressure measurement device 60 and the refrigerant temperature measurement device 61 is making abnormal noise.

When the second condition ceases to be met, as with Embodiment 1, the controller 18 calculates the first flow rate based on measurement results acquired from the refrigerant pressure measurement device 60, measurement results acquired from the refrigerant temperature measurement device 61, and measurement results acquired from the heat-medium temperature measurement device 62, and calculates an amount of adjustment.

According to Embodiment 2, when the second condition is met, the control calculation circuitry 26 calculates the first flow rate of the heat medium, based on measurement results acquired from the heat-medium pressure measurement device 63, instead of based on measurement results acquired from the refrigerant pressure measurement device 60, measurement results acquired from the refrigerant temperature measurement device 61, and measurement results acquired from the heat-medium temperature measurement device 62. The control calculation circuitry 26 then adjusts the calculated first flow rate by use of an amount of adjustment that has been calculated by the adjustment calculation circuitry 25 when the second condition is met.

In a calculation process to be executed by the controller 18 according to Embodiment 2 for calculating an amount of adjustment, the flow-rate acquisition device 6 in the calculation process according to Embodiment 1 described above with reference to Fig. 6 is to be read as the flow-rate acquisition device 6A. According to Embodiment 2, when the second condition is met, the adjustment calculation circuitry 25 calculates the first capacity and the first flow rate at step S3 based on measurement results acquired from the heat-medium pressure measurement device 63 via the input circuitry 21. Then at step S4, the adjustment calculation circuitry 25 calculates the second capacity and the second flow rate. At step S5, the adjustment calculation circuitry 25 calculates an amount of adjustment based on the first flow rate and the second flow rate. When the second condition ceases to be met, the adjustment calculation circuitry 25 calculates the first capacity and the first flow rate at step S3 based on measurement results acquired from the refrigerant pressure measurement device 60, measurement results acquired from the refrigerant temperature measurement device 61, and measurement results acquired from the heat-medium temperature measurement device 62. Then at step S4, the adjustment calculation circuitry 25 calculates the second capacity and the second flow rate. At step S5, the adjustment calculation circuitry 25 calculates an amount of adjustment based on the first flow rate and the second flow rate. When the second condition ceases to be met, the adjustment calculation circuitry 25 may calculate only the first capacity at step S3, calculate only the second capacity at step S4, and calculate an amount of adjustment at step S5 by use of the first capacity and the second capacity.

In a control process to be executed by the controller 18 according to Embodiment 2, the flow-rate acquisition device 6 in the control process according to Embodiment 1 described above with reference to Fig. 7 is to be read as the flow-rate acquisition device 6A. According to Embodiment 2, when the second condition is met, the control calculation circuitry 26 calculates the first flow rate at step S11 based on measurement results acquired from the heat-medium pressure measurement device 63. When the second condition ceases to be met, the control calculation circuitry 26 calculates the first flow rate at step S11 based on measurement results acquired from the refrigerant pressure measurement device 60, measurement results acquired from the refrigerant temperature measurement device 61, and measurement results acquired from the heat-medium temperature measurement device 62.

Description is made below on effects provided by the heat pump system 200 according to Embodiment 2. The flow-rate acquisition device 6A according Embodiment 2 further includes the heat-medium pressure measurement device 63. The heat-medium pressure measurement device 63 is configured to measure a pressure of the heat medium in the inlet of the heat medium heat exchanger 16, and a pressure of the heat medium in the outlet of the heat medium heat exchanger 16. The adjustment calculation circuitry 25 is configured to, when a predetermined second condition is met, and when the first condition is met, calculate the first flow rate based on measurement results acquired from the heat-medium pressure measurement device 63. The adjustment calculation circuitry 25 is configured to calculate an amount of adjustment based on the result of comparison between the calculated first flow rate and the second flow rate. The control calculation circuitry 26 is configured to, when the second condition is met, calculate the first flow rate based on measurement results acquired from the heat-medium pressure measurement device 63. The control calculation circuitry 26 is configured to adjust the first flow rate calculated when the second condition is met, by use of an amount of adjustment calculated when the second condition is met. As a result, when the second condition is met, the controller 18 is able to calculate the first flow rate easily and quickly. This therefore improves the efficiency with which the controller 18 executes the calculation process and the control process.

According to Embodiment 2, the second condition is one of the following three conditions. The first one of these conditions is that the cumulative running time of the heat pump system 200 is less than a predetermined first running time. The second one of these conditions is that the cumulative execution time of the temperature regulation operation is less than a predetermined first execution time. The third one of these conditions is that one of the refrigerant pressure measurement device 60, the refrigerant temperature measurement device 61, and the heat-medium temperature measurement device 62 is in a degraded, abnormal, or malfunctioning state. When the second condition to be used is the first or second one of the above-mentioned conditions, the controller 18 is able to execute the calculation process and the control process quickly until variations occur in the pressure loss in the heat medium heat exchanger 16 due to scale formation in the heat medium heat exchanger 16 or other causes. When the second condition to be used is the third one of the above-mentioned conditions, the controller 18 is able to, when an abnormality or other problem occurs in a device such as the refrigerant pressure measurement device 60 and the refrigerant temperature measurement device 61, calculate the flow rate of the heat medium by use of the heat-medium pressure measurement device 63 instead.

### Embodiment 3.

A heat pump system 300 according to Embodiment 3 provides notification to a user when the flow rate of the heat medium becomes less than the threshold flow rate. The heat pump system 300 according to Embodiment 3 is described below. In Embodiment 3, components similar to the components described above with reference to Embodiments 1 and 2 are designated by the same reference signs. In Embodiment 3, configurations similar to the configurations according to Embodiments 1 and 2, and functions and other features similar to the functions and other features according to Embodiments 1 and 2 are not described unless specific circumstances require otherwise.

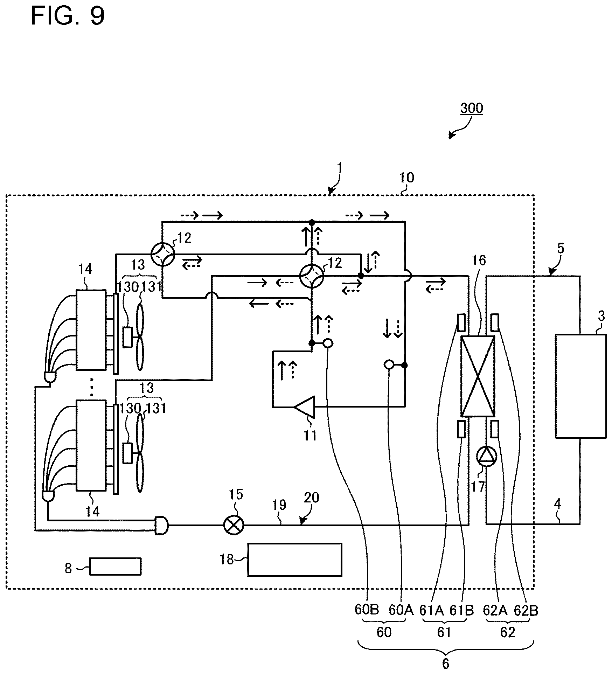

Fig. 9 illustrates an example of the configuration of the heat pump system according to Embodiment 3. The heat pump system 300 according to Embodiment 3 includes a notification device 8 in addition to the components described above with reference to Embodiment 1. The notification device 8 according to Embodiment 3 is provided to the heat source apparatus 1. The notification device 8 may be included in the controller 18. Although the notification device 8 is illustrated in Fig. 9 as being located inside the heat source apparatus 1, the notification device 8 may be located outside the heat source apparatus 1. The notification device 8 may be provided to the load apparatus 3.

The notification device 8 is connected to the controller 18 by a signal line (not illustrated). The notification device 8 performs communication with the instruction circuitry 22. The notification device 8 and the instruction circuitry 22 each include a communication interface circuit for performing communication with each other. The notification device 8 and the instruction circuitry 22 may perform wireless communication with each other. When the notification device 8 is included in the controller 18, the notification device 8 is connected to the instruction circuitry 22 via the bus 76.

The notification device 8 includes an illumination unit or a contact. Alternatively, the notification device 8 includes a communication interface circuit capable of communicating with a user's terminal or other devices. The illumination unit is to be installed at a location that allows a user to check lighting-up of the illumination unit, such as on the outside of the exterior housing 10 of the heat source apparatus 1. When the first flow rate that has been adjusted is determined to be less than the threshold flow rate, the instruction circuitry 22 instructs the notification device 8 to provide notification that the flow rate of the heat medium is less than the threshold flow rate. The notification device 8 provides notification when instructed by the instruction circuitry 22 to provide notification. In this case, when the notification device 8 includes an illumination unit, the notification device 8 causes the illumination unit to light up or flash. When the notification device 8 includes a contact, the notification device 8 provides notification by, for example, actuating an actuator connected to the contact, such as by closing the contact. When the notification device 8 includes a communication interface circuit capable of communicating with a user's terminal, the notification device 8 provides notification by transmitting, to the user's terminal, information indicating that the flow rate of the heat medium is less than the threshold flow rate.

The controller 18 according to Embodiment 3 executes a calculation process for calculating an amount of adjustment in a manner similar to the calculation processes according to Embodiments 1 and 2 described above with reference to Fig. 6. The controller 18 according to Embodiment 3 executes a control process in a manner similar to, other than points described below, the control processes according to Embodiments 1 and 2 described above with reference to Fig. 7. According to Embodiment 3, at step S14, instead of or in addition to performing the control of the pump 17, the instruction circuitry 22 instructs the notification device 8 to provide notification. The notification device 8 provides notification in accordance with the instruction from the instruction circuitry 22.

The instruction circuitry 22 may instruct the notification device 8 to provide notification, when the first flow rate that has been adjusted falls below the threshold flow rate consecutively at predetermined intervals of time, rather than each time the adjusted first flow rate falls below the threshold flow rate.

Although the foregoing description of Embodiment 3 is directed to an exemplary configuration in which the notification device 8 is added to the heat pump system 100 according to Embodiment 1, the heat pump system 300 according to Embodiment 3 may be a heat pump system including the notification device 8 added to the heat pump system 200 according to Embodiment 2.

Description is made below on effects provided by the heat pump system 300 according to Embodiment 3. The heat pump system 300 according to Embodiment 3 further includes the notification device 8. The notification device 8 is configured to, when the control calculation circuitry 26 determines that the first flow rate that has been adjusted is less than the threshold flow rate, provide notification to an external destination to notify that the flow rate of the heat medium is less than the threshold flow rate. This allows a user or an operator to sense possible freezing of the heat medium heat exchanger 16, and quickly perform a necessary process.

### Embodiment 4.

A controller 18A according to Embodiment 4 is designed to acquire the flow rate of the heat medium with further improved accuracy. The configuration of the controller 18A according to Embodiment 4 is described below. In Embodiment 4, components similar to the components described above with reference to Embodiments 1 to 3 are designated by the same reference signs. In Embodiment 4, configurations similar to the configurations according to Embodiments 1 to 3, and functions and other features similar to the functions and other features according to Embodiments 1 to 3 are not described unless specific circumstances require otherwise.

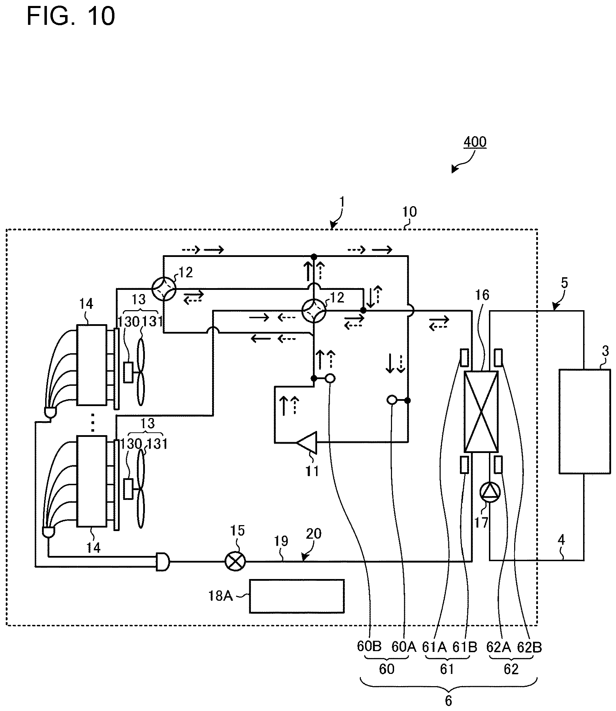

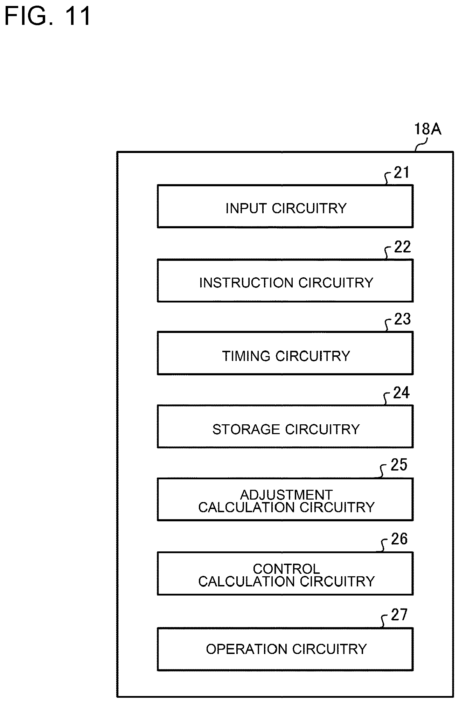

Fig. 10 illustrates an example of the configuration of a heat pump system according to Embodiment 4. A heat pump system 400 according to Embodiment 4 includes the controller 18A instead of the controller 18. Fig. 11 is a block diagram illustrating an example of the configuration of the controller according to Embodiment 4. The controller 18A further includes operation circuitry 27 in addition to components such as the input circuitry 21 and the instruction circuitry 22. The operation circuitry 27 includes, for example, a touchscreen, a button, or a keyboard. The operation circuitry 27 receives an operation from an external source, such as a user and an operator.

According to Embodiment 4, the operation circuitry 27 receives input of a value of a flow rate obtained from another flow-rate acquisition device, such as a flow rate sensor carried by an operator. In this regard, depending on the aging of the compressor 11, the inverter circuit, or other components, it may be difficult to obtain the second capacity and the second flow rate with accuracy. This means that when an amount of adjustment obtained by use of such a second flow rate or such a second capacity is used in adjusting the first flow rate, the resulting adjusted first flow rate may differ from the actual flow rate of the heat medium.

The adjustment calculation circuitry 25 calculates, by use of the value of the flow rate acquired via the operation circuitry 27, an amount of correction for correcting the first flow rate. Specifically, the adjustment calculation circuitry 25 calculates the difference between the value of the flow rate acquired via the operation circuitry 27, and the value of the first flow rate that is based on measurement results acquired from the flow-rate acquisition device 6. The adjustment calculation circuitry 25 stores the calculated difference into the storage circuitry 24 as an amount of correction.

In the calculation process for an amount of adjustment, the adjustment calculation circuitry 25 corrects, by use of the amount of correction, the first flow rate that is based on the measurement results acquired from the flow-rate acquisition device 6. The adjustment calculation circuitry 25 then calculates an amount of adjustment by use of the corrected first flow rate and the second flow rate. The adjustment calculation circuitry 25 then stores the calculated amount of adjustment into the storage circuitry 24. At this time, the adjustment calculation circuitry 25 updates the amount of adjustment calculated last time, with the amount of adjustment calculated this time. The control calculation circuitry 26 corrects, by use of the amount of correction, the first flow rate that is based on the measurement results acquired from the flow-rate acquisition device 6. The control calculation circuitry 26 then adjusts the corrected first flow rate by use of the amount of adjustment. The control calculation circuitry 26 determines whether the adjusted first flow rate is less than the threshold flow rate.

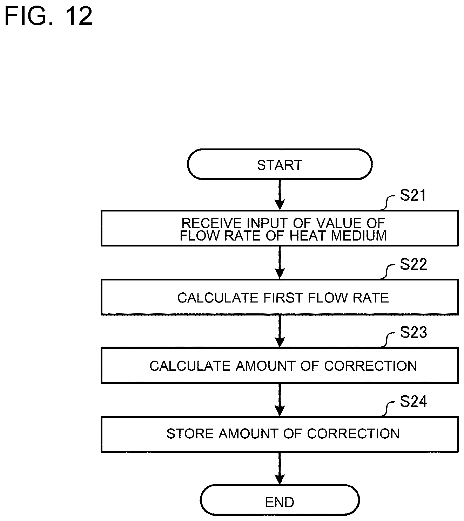

Fig. 12 is a flowchart of an exemplary calculation process to be executed by the controller according to Embodiment 4 for calculating an amount of correction. At step S21, the operation circuitry 27 receives input of a value of a flow rate of the heat medium. At step S22, the adjustment calculation circuitry 25 acquires measurement results from the flow-rate acquisition device 6, and calculates the first flow rate based on the acquired measurement results. Steps S21 and S22 may be executed in parallel, or may be executed in the reverse order.

At step S23, the adjustment calculation circuitry 25 calculates an amount of correction by use of the following information: the value of the flow rate received at the operation circuitry 27 at step S21, and the first flow rate calculated at step S22. At step S24, the adjustment calculation circuitry 25 stores the calculated amount of correction into the storage circuitry 24. After step S24, the controller 18A ends the calculation process for calculating an amount of correction.

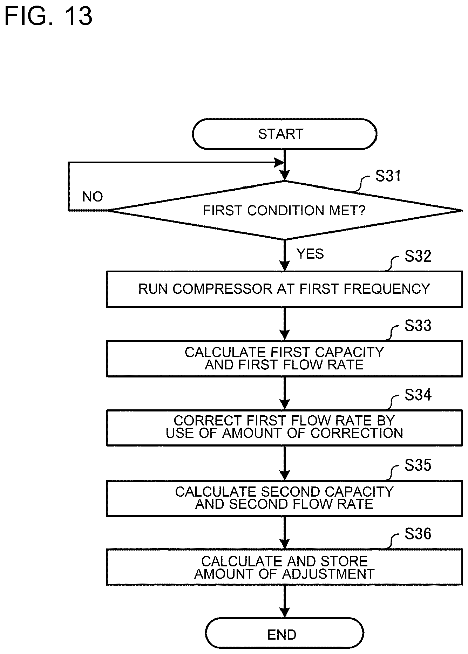

Fig. 13 is a flowchart of an exemplary calculation process to be executed by the controller according to Embodiment 4 for calculating an amount of adjustment. Steps S31 to S33 are respectively similar to steps S1 to S3. For the calculation process for calculating an amount of adjustment according to Embodiment 4, the controller 18 described above with reference to Fig. 6 is to be read as the controller 18A. At step S33, the adjustment calculation circuitry 25 calculates not only the first capacity but also the first flow rate.

At step S34, the adjustment calculation circuitry 25 corrects the first flow rate calculated at step S33, by use of an amount of correction stored in the storage circuitry 24. Step S35 is similar to step S4. At step S35, the adjustment calculation circuitry 25 calculates not only the second capacity but also the second flow rate. Steps S33 and S34, and step S35 may be executed in the reverse order, or may be executed in parallel.

At step S35, the adjustment calculation circuitry 25 calculates an amount of adjustment by use of the following information: the first flow rate corrected at step S34, and the second flow rate calculated at step S35. The adjustment calculation circuitry 25 then stores the calculated amount of adjustment into the storage circuitry 24.

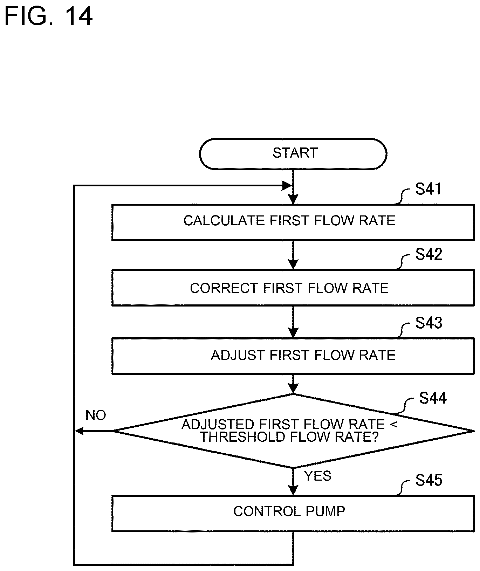

Fig. 14 is a flowchart of an exemplary control process to be executed by the controller according to Embodiment 4. Step S41 is similar to step S11. For the control process according to Embodiment 4, the controller 18 described above with reference to Fig. 7 is to be read as the controller 18A. At step S42, the control calculation circuitry 26 corrects the first flow rate calculated at step S41, by use of an amount of correction stored in the storage circuitry 24. At step S43, the control calculation circuitry 26 adjusts the first flow rate corrected at step S42, by use of an amount of adjustment stored in the storage circuitry 24. Steps S44 and S45 are respectively similar to steps S13 and S14.

The foregoing description of Embodiment 4 is directed to an exemplary configuration in which, for the heat pump system 100 according to Embodiment 1, the controller 18 is replaced with the controller 18A. The heat pump system 400 according to Embodiment 4, however, may be one in which, for the heat pump system 200 according to Embodiment 2, or the heat pump system 300 according to Embodiment 3, the controller 18 is replaced with the controller 18A. When the heat pump system 200 with the controller 18 replaced with the controller 18A is to be employed as the heat pump system 400, in the foregoing description of the heat pump system 400 according to Embodiment 4, the flow-rate acquisition device 6 is to be read as the flow-rate acquisition device 6A.

Description is made below on effects provided by the heat pump system 400 according to Embodiment 4. The controller 18 according to Embodiment 4 further includes the operation circuitry 27. The operation circuitry 27 is configured to receive a value of a flow rate of the heat medium input from an external source. For instance, when performing maintenance, addition of a pipe, or other operations on the heat pump system 400, a contractor may, in some cases, measure the flow rate of the heat medium on-site by use of a flow rate sensor. The contractor may, in some cases, input the value of the measured flow rate to the controller 18 via the operation circuitry 27. The adjustment calculation circuitry 25 is configured to, by use of the input value, calculate an amount of correction. The amount of correction is an amount of correction for correcting the first flow rate that is based on measurement results acquired from the flow-rate acquisition device 6. The adjustment calculation circuitry 25 is configured to, by use of the calculated amount of correction, correct the first flow rate that is based on the measurement results acquired from the flow-rate acquisition device 6. The adjustment calculation circuitry 25 is configured to, by use of the compressor frequency, calculate the amount of adjustment for adjusting the corrected first flow rate. The control calculation circuitry 26 is configured to, by use of the amount of correction, correct the first flow rate that is based on the measurement results acquired from the flow-rate acquisition device 6, and, by use of the amount of adjustment, adjust the corrected first flow rate. The configuration mentioned above allows the heat pump system 400 to acquire the flow rate of the heat medium with accuracy.

The flow-rate acquisition device 6 and the flow-rate acquisition device 6A according to Embodiments 1 to 4 mentioned above do not directly measure the flow rate of the heat medium. Alternatively, the heat pump systems 100 to 400 may include a flow rate sensor for directly measuring the flow rate of the heat medium, together with the above-mentioned flow-rate acquisition device 6 or the flow-rate acquisition device 6A, or instead of the flow-rate acquisition device 6 and the flow-rate acquisition device 6A. This is described below in more detail. The flow rate sensor is an example of a flow-rate acquisition device that acquires the flow rate of the heat medium together with the flow-rate acquisition device 6 and the flow-rate acquisition device 6A.

When the heat pump systems 100 to 400 are to execute calculation of an amount of adjustment in conjunction with the temperature regulation operation, the resulting amount of processing increases. This can cause a delay in the processing to be executed by the heat pump systems 100 to 400. When, however, the heat pump systems 100 to 400 are to frequency execute the adjustment operation independently from the temperature regulation operation, much time is taken up for the adjustment operation. This can lead to reduced user comfort. One way to prevent this is to reduce the number of times at which the adjustment operation is to be executed. In this case, however, the error in the amount of adjustment used for adjusting the first flow rate can increase as time elapses from the end of the adjustment operation. When the heat pump systems 100 to 400 include a flow rate sensor together with the flow-rate acquisition device 6 or the flow-rate acquisition device 6A, the heat pump systems 100 to 400 may, at time intervals corresponding to a predetermined minimum possible first number of times, control the compressor frequency such that the compressor frequency is set to the first frequency, and calculate an amount of adjustment for adjusting the first flow rate that is based on measurement results acquired from the flow-rate acquisition device 6 or the flow-rate acquisition device 6A. Within a predetermined time after the end of the last adjustment operation, the heat pump systems 100 to 400 may use, for the temperature regulation operation, the first flow rate adjusted as described above. After elapse of a predetermined time from the end of the last adjustment operation, the heat pump systems 100 to 400 may use, for the temperature regulation operation, the first flow rate measured with the flow rate sensor, which has a comparatively higher accuracy. It is to be noted that the heat pump systems 100 to 400 may calculate an amount of adjustment for adjusting the first flow rate measured with the flow rate sensor, instead of the first flow rate that is based on measurement results acquired from the flow-rate acquisition device 6 or the flow-rate acquisition device 6A. The heat pump systems 100 to 400 may then adjust the first flow rate that is based on the flow rate sensor, and use the adjusted first flow rate for the temperature regulation operation.

When the heat pump systems 100 to 400 include a flow rate sensor instead of the flow-rate acquisition device 6 and the flow-rate acquisition device 6A, the adjustment calculation circuitry 25 calculates an amount of adjustment for adjusting the first flow rate acquired from the flow rate sensor. Then, by use of the amount of adjustment, the control calculation circuitry 26 adjusts the first flow rate acquired from the flow rate sensor. In this case, the heat pump systems 100 to 400 may include the refrigerant temperature measurement device 61, and the heat-medium temperature measurement device 62. The adjustment calculation circuitry 25 may calculate the second flow rate from measurement results acquired from these measurement devices, and calculate an amount of adjustment for adjusting the first flow rate acquired from the flow rate sensor.

Embodiment 1 has been described above with reference to an exemplary case in which the flow-rate acquisition device 6 includes the refrigerant pressure measurement device 60, the refrigerant temperature measurement device 61, and the heat-medium temperature measurement device 62. Alternatively, the flow-rate acquisition device 6 may include the refrigerant temperature measurement device 61, the heat-medium temperature measurement device 62, and the heat-medium pressure measurement device 63. In this case, the adjustment calculation circuitry 25 and the control calculation circuitry 26 may calculate the first flow rate, based on measurement results acquired from the heat-medium pressure measurement device 63. The adjustment calculation circuitry 25 may, based on the compressor frequency, and measurement results acquired from the refrigerant temperature measurement device 61, calculate the amount of heat given by the refrigerant to the heat medium, and may, based on the calculated amount of heat, and measurement results acquired from the heat-medium temperature measurement device 62, calculate the second flow rate. The adjustment calculation circuitry 25 may then calculate an amount of adjustment for adjusting the first flow rate that is based on the measurement results acquired from the heat-medium pressure measurement device 63, and store the calculated amount of adjustment into the storage circuitry 24. The control calculation circuitry 26 may calculate the first flow rate based on the measurement results acquired from the heat-medium pressure measurement device 63, and adjust the calculated first flow rate by use of the amount of adjustment.

Although the foregoing description of Embodiments 1 to 4 is directed to an example in which the heat source apparatus 1 includes the flow switching devices 12 to allow switching between heating and cooling of the heat medium, the heat source apparatus 1 may include no flow switching device 12, and perform only one of heating and cooling of the heat medium. When the heat source apparatus 1 is to perform only heating of the heat medium, the heat source apparatus 1 includes, instead of the one or more flow switching devices 12 illustrated in Fig. 1 and Figs. 8 to 10, the refrigerant pipe 19 corresponding to each of the refrigerant flow paths represented by the solid lines inside the one or more flow switching devices 12. When the heat source apparatus 1 is to perform only cooling of the heat medium, the heat source apparatus 1 includes, instead of the one or more flow switching devices 12 illustrated in Fig. 1 and Figs. 8 to 10, the refrigerant pipe 19 corresponding to each of the refrigerant flow paths represented by the dashed lines inside the one or more flow switching devices 12. When the heat source apparatus 1 is to perform only heating of the heat medium, the refrigerant pressure measurement device 60 may include no first refrigerant-pressure sensor 60A. When the heat source apparatus 1 is to perform only cooling of the heat medium, the refrigerant pressure measurement device 60 may include no second refrigerant-pressure sensor 60B.

Although embodiments of the present disclosure have been described above, the scope of the present disclosure is not limited to the above embodiments but may cover conceivable equivalents.

### Reference Signs List

1: heat source apparatus, 3: load apparatus, 4: heat medium pipe, 5: heat medium circuit, 6, 6A: flow-rate acquisition device, 8: notification device, 10: exterior housing, 11: compressor, 12: flow switching device, 13: heat source air-sending device, 14: heat source heat exchanger, 15: expansion valve, 16: heat medium heat exchanger, 17: pump, 18, 18A: controller, 19: refrigerant pipe, 20: refrigerant circuit, 21: input circuitry, 22: instruction circuitry, 23: timing circuitry, 24: storage circuitry, 25: adjustment calculation circuitry, 26: control calculation circuitry, 27: operation circuitry, 60: refrigerant pressure measurement device, 60A: first refrigerant-pressure sensor, 60B: second refrigerant-pressure sensor, 61: refrigerant temperature measurement device, 61A: first refrigerant-temperature sensor, 61B: second refrigerant-temperature sensor, 62: heat-medium temperature measurement device, 62A: first heat-medium temperature sensor, 62B: second heat-medium temperature sensor, 63: heat-medium pressure measurement device, 63A: first heat-medium pressure sensor, 63B: second heat-medium pressure sensor, 70: processor, 71: memory, 72: input interface circuit, 73: output interface circuit, 74: timing device, 75: storage device, 76: bus, 100, 200, 300, 400: heat pump system, A1, A2, A3: region, C1, C2, C3: point, D: critical point, F: saturated liquid line, G: saturated vapor line, h: enthalpy, P: pressure, T: dashed line

## Claims

1. A heat pump system configured to, by use of a heat medium, regulate a temperature of an object to be temperature-regulated, the heat pump system comprising:
a heat source apparatus configured to regulate a temperature of the heat medium;
a load apparatus connected to the heat source apparatus via a heat medium pipe to form a heat medium circuit together with the heat source apparatus, the load apparatus being configured to regulate the temperature of the object by use of the heat medium temperature-regulated in the heat source apparatus; and
a flow-rate acquisition device configured to measure a flow rate of the heat medium, or a physical quantity for calculating the flow rate of the heat medium,
the heat source apparatus including
a compressor configured to compress refrigerant,
a heat medium heat exchanger connected to the load apparatus via the heat medium pipe, and connected to the compressor via a refrigerant pipe, the heat medium heat exchanger being configured to exchange heat between the refrigerant and the heat medium, and
a controller configured to control the heat source apparatus,
the controller including
adjustment calculation circuitry configured to, when a first condition, which is predetermined, is met, calculate an amount of adjustment by use of an operating frequency of the compressor, the amount of adjustment being an amount of adjustment for adjusting a first flow rate of the heat medium, the first flow rate being based on a measurement result acquired from the flow-rate acquisition device, and
control calculation circuitry configured to, by use of the amount of adjustment, adjust the first flow rate of the heat medium that is based on the measurement result acquired from the flow-rate acquisition device, to an adjusted first flow rate.

2. The heat pump system of claim 1,
wherein the first condition is one of a plurality of conditions, the plurality of conditions including
a condition that a current point in time is not within an execution time during which a temperature regulation operation is executed, the temperature regulation operation being an operation executed by the heat pump system to regulate the temperature of the object,
a condition that the current point in time is within a first time, the first time being a predetermined time within a time other than the execution time, and
a condition that the heat pump system is operated at a load less than a predetermined threshold load.

3. The heat pump system of claim 2,
wherein the controller includes
storage circuitry configured to store at least one of the execution time, and the time other than the execution time, and
timing circuitry configured to measure time, and
wherein the adjustment calculation circuitry is configured to
based on the at least one of the execution time and the time other than the execution time stored in the storage circuitry, and on the time measured by the timing circuitry, determine whether the first condition that the current point in time is not within the execution time is met.

4. The heat pump system of claim 2,
wherein the controller includes
storage circuitry configured to store the first time, and
timing circuitry configured to measure time, and
wherein the adjustment calculation circuitry is configured to
based on the first time stored in the storage circuitry, and on the time measured by the timing circuitry, determine whether the first condition that the current point in time is within the first time is met.

5. The heat pump system of any one of claims 1 to 4,
wherein the flow-rate acquisition device includes
a refrigerant pressure measurement device configured to measure a pressure of the refrigerant in a suction portion of the compressor, and a pressure of the refrigerant in a discharge portion of the compressor,
a refrigerant temperature measurement device configured to measure a temperature of the refrigerant in an inlet of the heat medium heat exchanger, and a temperature of the refrigerant in an outlet of the heat medium heat exchanger, and
a heat-medium temperature measurement device configured to measure a temperature of the heat medium in the inlet of the heat medium heat exchanger, and a temperature of the heat medium in the outlet of the heat medium heat exchanger,
wherein the refrigerant is a zeotropic refrigerant, and
wherein the adjustment calculation circuitry is configured to
calculate a first capacity corresponding to an amount of heat given by the refrigerant to the heat medium, the first capacity being based on a measurement result acquired from the refrigerant pressure measurement device and on a measurement result acquired from the refrigerant temperature measurement device,
based on a measurement result acquired from the heat-medium temperature measurement device, and on the first capacity, calculate the first flow rate,
calculate a second capacity corresponding to an amount of heat given by the refrigerant to the heat medium, the second capacity being based on the operating frequency, and
make a comparison between a second flow rate and the first flow rate, and based on a result of the comparison, calculate the amount of adjustment, the second flow rate being a flow rate of the heat medium based on the second capacity.

6. The heat pump system of any one of claims 1 to 4,
wherein the flow-rate acquisition device includes
a refrigerant pressure measurement device configured to measure a pressure of the refrigerant in a suction portion of the compressor, and a pressure of the refrigerant in a discharge portion of the compressor,
a refrigerant temperature measurement device configured to measure a temperature of the refrigerant in an inlet of the heat medium heat exchanger, and a temperature of the refrigerant in an outlet of the heat medium heat exchanger, and
a heat-medium temperature measurement device configured to measure a temperature of the heat medium in the inlet of the heat medium heat exchanger, and a temperature of the heat medium in the outlet of the heat medium heat exchanger,
wherein the refrigerant is a zeotropic refrigerant, and
wherein the adjustment calculation circuitry is configured to
calculate a first capacity corresponding to an amount of heat given by the refrigerant to the heat medium, the first capacity being based on a measurement result acquired from the refrigerant pressure measurement device and on a measurement result acquired from the refrigerant temperature measurement device,
calculate a second capacity corresponding to an amount of heat given by the refrigerant to the heat medium, the second capacity being based on the operating frequency, and
make a comparison between the first capacity and the second capacity, and calculate the amount of adjustment based on a result of the comparison and on a measurement result acquired from the heat-medium temperature measurement device.

7. The heat pump system of claim 5 or 6,
wherein the flow-rate acquisition device further includes
a heat-medium pressure measurement device configured to measure a pressure of the heat medium in the inlet of the heat medium heat exchanger, and a pressure of the heat medium in the outlet of the heat medium heat exchanger,
wherein the adjustment calculation circuitry is configured to,
when a second condition, which is predetermined, is met, and when the first condition is met, calculate the first flow rate based on a measurement result acquired from the heat-medium pressure measurement device, instead of based on the measurement result acquired from the refrigerant pressure measurement device, the measurement result acquired from the refrigerant temperature measurement device, and the measurement result acquired from the heat-medium temperature measurement device,
make a comparison between the calculated first flow rate, and the second flow rate of the heat medium that is based on the second capacity, and
calculate the amount of adjustment based on a result of the comparison, and
wherein the control calculation circuitry is configured to,
when the second condition is met, calculate the first flow rate based on the measurement result acquired from the heat-medium pressure measurement device, instead of based on the measurement result acquired from the refrigerant pressure measurement device, the measurement result acquired from the refrigerant temperature measurement device, and the measurement result acquired from the heat-medium temperature measurement device, and
by use of the amount of adjustment calculated when the second condition is met, adjust the calculated first flow rate.

8. The heat pump system of claim 7,
wherein the second condition is one of a plurality of conditions, the plurality of conditions including
a condition that a cumulative running time of the heat pump system is less than a predetermined first running time,
a condition that a cumulative execution time of a temperature regulation operation is less than a predetermined first execution time, the temperature regulation operation being an operation executed by the heat pump system to regulate the temperature of the object, and
a condition that one of the refrigerant pressure measurement device, the refrigerant temperature measurement device, and the heat-medium temperature measurement device is in a degraded, abnormal, or malfunctioning state.

9. The heat pump system of any one of claims 1 to 8,
wherein the controller is configured to,
when the first condition is met, cause the compressor to operate at a first frequency, which is predetermined, and
wherein the first frequency is the operating frequency for acquiring a flow rate of the refrigerant within a predetermined tolerance.

10. The heat pump system of any one of claims 1 to 9, further comprising
a pump connected to the heat medium heat exchanger and the load apparatus via the heat medium pipe, the pump being configured to cause the heat medium to circulate in the heat medium circuit,
wherein the control calculation circuitry is configured to
determine whether the adjusted first flow rate is less than a threshold flow rate, the threshold flow rate being previously determined to prevent freezing of the heat medium heat exchanger, and
wherein the controller further includes
instruction circuitry configured to, when the adjusted first flow rate is determined to be less than the threshold flow rate, control the pump to make the flow rate of the heat medium greater than or equal to the threshold flow rate.

11. The heat pump system of any one of claims 1 to 10,
wherein the control calculation circuitry is configured to
determine whether the adjusted first flow rate is less than a threshold flow rate, the threshold flow rate being previously determined to prevent freezing of the heat medium heat exchanger, and
wherein the heat pump system further comprises
a notification device configured to, when the adjusted first flow rate is less than the threshold flow rate, provide notification to an external destination to notify that the flow rate of the heat medium is less than the threshold flow rate.

12. The heat pump system of any one of claims 1 to 11,
wherein the controller further includes
operation circuitry configured to receive a value of a flow rate of the heat medium input from an external source,
wherein the adjustment calculation circuitry is configured to,
by use of the input value, calculate an amount of correction, the amount of correction being an amount of correction for correcting the first flow rate that is based on the measurement result acquired from the flow-rate acquisition device,
by use of the amount of correction, correct the first flow rate that is based on the measurement result acquired from the flow-rate acquisition device, and
by use of the operating frequency, calculate the amount of adjustment for adjusting the corrected first flow rate, and
wherein the control calculation circuitry is configured to,
by use of the amount of correction, correct the first flow rate that is based on the measurement result acquired from the flow-rate acquisition device, and
by use of the amount of adjustment, adjust the corrected first flow rate.
